# EUROPEAN PATENT SPECIFICATION

(11) **EP 1 407 818 B1**
(45) Date of publication and mention of the grant of the patent: **16.09.2009**
(21) Application number: 01949998.7
(22) Date of filing: 16.07.2001
(51) Int. Cl.: B01J 20/28, B01D 71/36, B01D 71/70, B01D 53/04, B01D 69/14, H05B 33/04

(54) **SHEET FOR TREATING GASEOUS INGREDIENT AND ELECTROLUMINESCENT ELEMENT EMPLOYING THE SAME**
FLÄCHENGEBILDE ZUR BEHANDLUNG VON GASFÖRMIGEM BESTANDTEIL UND ELEKTROLUMINESZENZELEMENT, BEI DEM DIESES VERWENDET WIRD
FEUILLE CONCUE POUR TRAITER UN INGREDIENT GAZEUX ET ELEMENT ELECTROLUMINESCENT UTILISANT CELLE-CI

(43) Date of publication of application: 14.04.2004
(73) Proprietor: NITTO DENKO CORPORATION, Ibaraki-shi, Osaka 567-8680 (JP)
(72) Inventor: NISHII, Hiroyuki, Ibaraki-shi, Osaka 567-8680 (JP); MASHIKO, Hiroaki, Ibaraki-shi, Osaka 567-8680 (JP)
(74) Representative: Koepe, Gerd L.
(86) International application number: PCT/JP2001/006141
(87) International publication number: WO 2003/008094

(56) References cited:
- EP-A- 1 079 666
- JP-A- 2 078 433
- JP-A- 2 094 322
- JP-A- 4 210 232
- JP-A- 10 057 807
- JP-A- 11 033 342
- JP-A- 55 013 160
- JP-A- 55 158 933
- US-A- 4 740 219
- US-A- 4 830 643
- US-A- 5 700 375
- US-A- 6 117 328
- DATABASE WPI Week 200039 Derwent Publications Ltd., London, GB; AN 1996-134015 XP002346549 & JP 03 067080 B2 (TOHO RAYON KK) 17 July 2000 (2000-07-17)

## Description

### Technical Field

The present invention relates to a gaseous component treatment sheet for reducing a predetermined gaseous component, and an electroluminescent (hereinafter, referred to as "EL") element using the gaseous component treatment sheet.

### Background Art

Conventionally, displays and light emitting elements used in mobile equipment or the like include EL elements (electroluminescent elements) as illuminants. However, such an EL element has a disadvantage, that is, the initial light emitting performance in light emission luminance, light-emission uniformity or the like deteriorates considerably due to the use at a high temperature or aging. This deterioration in the light-emitting performance is caused by a dark spot within the EL element. The dark spot is a portion not emitting light, and it is formed due to moisture adsorbed on the surface of the constituents or the materials, and also due to water vapor, oxygen and organic vapor entering from exterior.

Regarding a hard disk for a computer, the disk drive head will be damaged due to the internal fine particles and the disk surface will be soiled by the organic vapor.

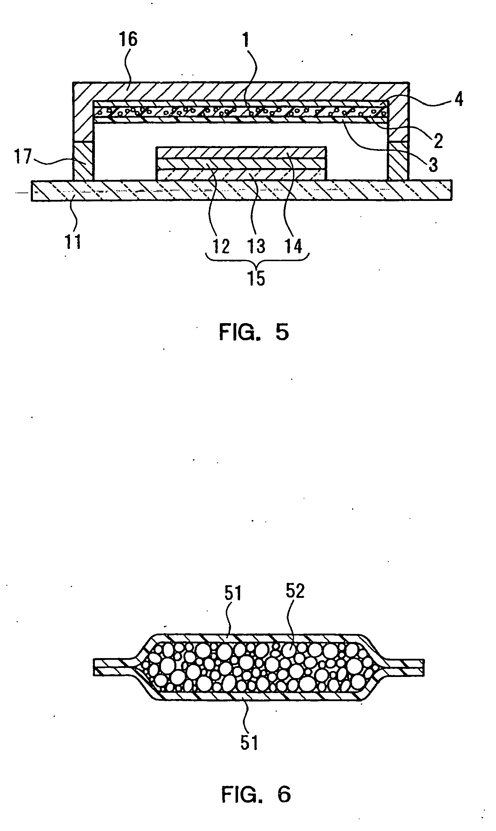

The above-mentioned problems can be solved by the use of an adsorptive member that is manufactured by encapsulating an adsorbent for adsorbing organic vapors or the like in a porous container. For example, JP 11(1999)-57377 A describes in FIG. 6 an adsorbent-encapsulating porous vessel that holds an adsorbent 52 in a vessel formed by sealing the peripheral parts of a pair of polytetrafluoroethylene (hereinafter, referred to as PTFE') porous films 51.

For corresponding to miniaturization of mobile equipment and the trend for automated attachment of adsorptive members, the EL element and adsorptive members to be incorporated in the EL element are preferably adjustable in size and shape. However, since the above-described conventional adsorptive members are shaped as vessels, the sizes and shapes have been under a certain restriction. The restriction causes difficulty in adjustment of the sizes and shapes of the EL elements.

The documents EP-A-1079 666, US-A-4740219 and US-A-6117328 describe a gaseous component treatment sheet comprising a particulate agent dispersed in a resin or in a non-porous membrane.

The document US-A-5700375 discloses a porous polymeric membrane having dispersed oxidant scavenger particles.

### Disclosure of Invention

In view of the above-mentioned circumstances, an object of the present invention is to provide a gaseous component treatment sheet that can be adjusted easily in size and shape, and an EL element using the gaseous component treatment sheet.

For achieving the above-mentioned object, the gaseous component treatment sheet of the present invention has a gas-permeable base film and particulate remover for removing a predetermined gaseous component, and the particulate remover is dispersed in the base film, wherein the base film is a porous film, the sheet further comprising a gas-permeable protective layer, the protective layer being laminated on the base film.

The gaseous component treatment sheet can be adjusted easily in size and shape since the base film is a sheet-like member that holds the particulate remover.

The gaseous component treatment sheet of the present invention corresponds to the trend for a small and thin EL element. The present invention provides also an EL element having the gaseous component treatment sheet, though the intended use of the gaseous component treatment sheet of the present invention is not limited to an EL element.

### Brief Description of Drawings

FIG. 1 is a cross-sectional view showing an embodiment of a gaseous component treatment sheet according to the present invention.
FIG. 2 is a cross-sectional view showing another embodiment of a gaseous component treatment sheet according to the present invention.
FIG. 3 a cross-sectional view showing a third embodiment of a gaseous component treatment sheet according to the present invention.
FIG. 4 is a cross-sectional view showing an embodiment of an EL element according to the present invention.
FIG. 5 is a cross-sectional view showing another embodiment of an EL element according to the present invention.
FIG. 6 is a cross-sectional view showing a conventional adsorptive member.

### Preferred Embodiment of the Invention

Preferred embodiments according to the present invention will be described below by referring to the attached drawings.

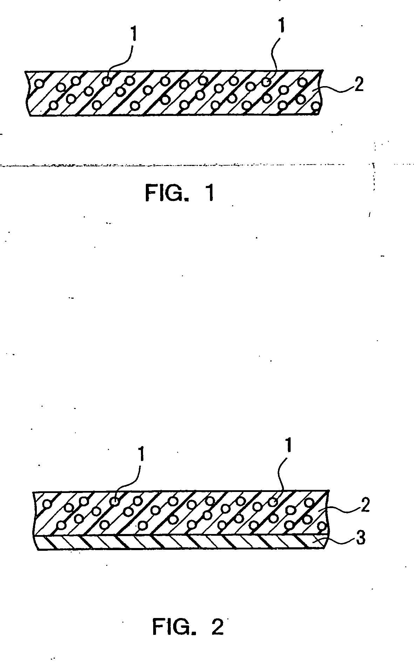

The gaseous component treatment sheet (hereinafter, referred to as "treatment sheet") in FIG. 1 is made of a gas-permeable base film 2 that holds particulate remover 1 for removing a gaseous component. Though the particle diameter of the remover 1 can be set suitably, it is generally about 0.1 µm to about 1000 µm.

Since a porous film is effective in improving the permeability rate of the gaseous component, efficiency in removing the gaseous component can be improved.

A polyolefin-based resin is preferred for the material of the base film, since it is inexpensive, easy to recycle after using, and enables control of the pore diameter so as to prevent shedding of the particulate remover even when pores are formed. Particularly-preferred examples thereof include a polyethylene, a polypropylene, poly 4-methyl-1-pentene and poly-1-butene, since the resins have excellent workability and they are easy to form porous films to control the pore diameter.
These polyolefin-based resins can be homopolymers or copolymers. Two or more kinds of the polyolefin-based resins can be blended in use. In this context, a polyolefin resin refers to a resin containing at least 50% of a polyolefin-based resin in weight.

For the material of the base film, a fluorine resin is preferred because of the excellent heat resistance and excellent usefulness at a high temperature, and PTFE is preferred especially.

As mentioned above, it is preferred that the base film is made of at least one resin selected from the group consisting of a polyolefin-based resin and a fluorine resin. The base film is not limited to a monolayer, but it can consist of multiple layers.

Typically, a suitable thickness for the base film ranges from about 1 µm to about 5000 µm. The average pore diameter is suitably from about 0.01 µm to about 100 µm.

When the base film is a PTFE porous film and applied alone without using any of the protective layer mentioned below, it is preferable that the PTFE porous film has a thickness of not less than 10 µm in view of the strength. The thickness is preferably not more than 1000 µm in view of the productivity. The average pore diameter of the PTFE porous film is preferably not more than 10 µm in order to hold the particulate remover, though it depends on the particle diameter of the remover. In view of the gas permeability, it is preferable that the average pore diameter is at least 0.01 µm.

Though the remover is not limited specifically as long as it can remove the gaseous component, preferably, it has a function of removing at least one component selected from the group consisting of water vapor, oxygen and an organic vapor. The remover can be a general-purpose compound used for an adsorbent, a moisture absorbent (desiccant), an oxygen remover (oxygen absorbent) or the like.

Examples of the adsorbent include activated carbon, silica gel, zeolite, and activated alumina.

The moisture absorbent can include, for example, a material that physically adsorbs moisture, or a material that chemically reacts with moisture (e.g., a material that reacts with water irreversibly so as to form a water-free compound, and a material that is combined with water reversibly so as to form a hydrate). Specific examples of the desiccant include silica gel, molecular sieves (e.g., zeolite), activated alumina, alkali metal oxides, alkaline earth metal oxides, diphosphorus pentaoxide, calcium hydride, and lithium aluminum hydride. Sulfates (e.g., calcium sulphate), carbonates (e.g., calcium carbonate), metal halides, perchlorate, organic substances or the like, can be used as well.

Examples of the oxygen remover include activated carbon, silica gel, zeolite, activated alumina, molecular sieves, magnesium oxide, and iron oxide.

Examples of suitable removers used for removing the organic vapor include activated carbon, silica gel, zeolite, and molecular sieves. Any of the above-mentioned materials can be mixed to form a remover.

The treatment sheet shown in FIG. 2 includes a gas-permeable base film 2 containing a particulate remover 1 dispersed therein and a gas-permeable protective layer 3 laminated on the base film 2. protective layer can be a porous film or a

This protective layer can be a porous film or a non-porous film as long as it has gas permeability. Since the permeation rate of the gaseous component is improved by the use of the porous film, efficiency in removing the gaseous component can be improved.

For the reason as described regarding the base film, it is preferable that the protective layer is made of a polyolefin-based resin or a fluorine resin (particularly, PTFE). Alternatively, a non-woven fabric, a mesh, a woven fabric, paper and a porous material of polyolefin-based resin or the like can be used.

The remover may be shed from the base film, depending on the type and dispersion amount of the remover, or depending on the pore diameter of the porous film. Depending on the type of the remover, shedding of a remover will affect adversely the El element or the like. Therefore, it is preferable to dispose a protective layer in order to hold the remover within the sheet, though the protective layer is not an essential element. The protective layer can function also as a reinforcer for the base film. It is particularly preferable to dispose a protective layer for reinforcement.

In the embodiment shown in FIG. 2, a surface that is not provided with a protective layer is used in general as a surface to adhere to an element. As described below, this surface can be provided previously with an adhesive layer. Alternatively, an adhesive layer can be provided in an EL element so that a surface of the base film having no protective layer can be adhered via this adhesive layer.

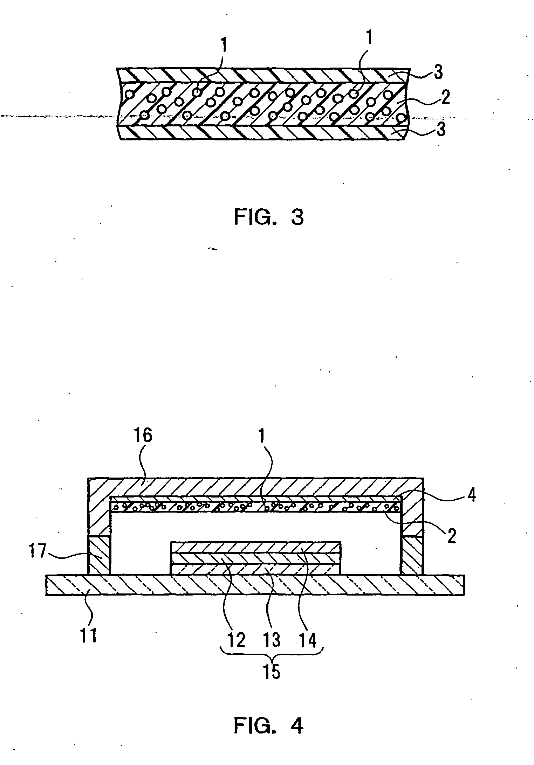

As shown in FIG. 3, protective layers 3 can be disposed on both surfaces of the base film 2. In this case, at least one of the protective layers is required to have gas permeability. When a non-permeable protective layer is disposed on a surface of the base film, the surface with the protective layer will be placed closer to an element.

In the embodiments as shown in FIGs. 2 and 3, the base film 2 containing the remover 1 functions as a gas treatment layer, while the protective layer 3 containing no remover functions as a layer for reinforcement, gas-permeation and prevention of shedding of remover.

The base film containing a dispersed remover can be prepared by a suitable method, depending on the material of the base film. With respect to typical materials, methods of producing base films will be described below.

When the base film is a porous film and the material is a polyolefin-based resin, methods as described below can be applied. For example, in a dry film formation method, a particulate remover is mixed in a polyolefin-based resin pellet and the mixture is melt-extruded, and furthermore the extrusion is stretched at low temperature and then at high temperature. In a wet film formation method, a particulate remover, a polyolefin-based resin and an agent-to-be-extracted are mixed to be subjected to processes such as molding and stretching, and subsequently the agent-to-be-extracted is extracted and removed by the use of a solvent or the like. In an alternative method, a particulate remover and a particulate polyolefin-based resin are mixed, and the mixture is melt-welded while being applied with heat and pressure so as to form a porous block, which will be sliced to form films.

When the base film is a porous film and the material is PTFE, methods as described below can be applied. For example, a particulate remover and a PTFE fine powder are mixed and a proper amount of extrusion auxiliary agent is added to the mixture. A preform (e.g., bullet-like) formed from the mixture is extruded to form a plate or a round bar from a die of an extruder. This paste is rolled to have a predetermined thickness and subsequently stretched to form pores at a predetermined temperature. Alternatively in this case, the paste can be fired after the stretching. In an alternative method, a base material is passed through a dispersion of a PTFE fine powder mixed with a particulate remover to be provided with a coating film of the PTFE fine powder. The coating film on the base material is then fired, peeled off from the base material and subsequently stretched at a predetermined temperature. In an alternative method, a particulate remover is mixed in a PTFE powder containing a filler such as a glass fiber. The mixture is molded to a predetermined shape, which is fired, and then sliced to form films.

The method including stretching for forming pores is suitably applied to a case of using a remover with a small particle diameter, since the pore diameter of the porous film can be decreased.

A protective layer can be provided, for example, by laminating at a predetermined temperature, adhering the base film and the protective layer at points via an adhesive, or by a melt-adhesion via a binder such as a net. Alternatively the base film and the protective layer can be melt-extruded simultaneously so as to form a film.

The thus produced treatment sheet is formed to have a predetermined size and shape and, for example, as shown in FIGs. 4 and 5, it is disposed within an EL element. The EL element includes a transparent substrate 11 on which a laminate (EL) 15 is provided. The laminate 15 is formed by sandwiching an organic light-emitting layer 12 with an anode 13 and a cathode 14. Aback plate 16 is arranged to cover the laminate 15, and the back plate 16 is sealed at the periphery with the substrate 11 through a sealing agent 17. The treatment sheet is fixed onto the inner surface of the back plate 16 through the adhesive layer 4. Due to this configuration, gaseous components such as moisture entering the EL element to cause dark spots will be decreased by the remover 1.

In the above-mentioned EL element, light is emitted through the substrate. The present invention is not limited to this configuration, but it can be applied to an EL element emitting light through the surface opposite to the substrate, or an EL element emitting light through the both surfaces.

Though there is no specific limitation for the adhesive layer, a pressure-sensitive adhesive is used preferably. Materials based on silicone, acrylic resins, or rubbers can be used for the pressure-sensitive adhesive. To decrease the influence of the organic gas on the EL laminate 15, an ultraviolet-curing type pressure-sensitive adhesive (generally based on acrylic materials) is used suitably.

Abase material including a non-woven fabric, a resin film, paper, a metal foil or the like can be disposed within the adhesive layer so as to improve further the strength of the treatment sheet. The improved strength results in improvement in workability during a process of attaching the treatment sheet.

The adhesive layer can be formed on the entire surface of the treatment sheet. Alternatively, it can be formed partially, for example, only at the periphery. When the adhesive layer is formed previously on the treatment sheet, the adhesive layer is disposed as an outermost layer of the treatment sheet. When a protective layer is disposed further, the treatment sheet is formed by laminating an adhesive layer 4, a base film 2 and a protective layer 3 in this order as shown in FIG. 5, and a protective layer is provided as an outermost layer opposite to the adhesive layer. An additional protective layer can be disposed between the adhesive layer and the base film.

The treatment sheet of the present invention can be processed to have a predetermined shape easily by punching or the like. Since the treatment sheet functions to treat gaseous components, it can be used without being subjected to additional processes, e.g., a process for forming a container. Therefore, the size and shape can be selected arbitrarily.

As a result, a small and thin EL element can be produced, and thus a trend for small and thin mobile equipment including EL elements can be coped with easily.

For fixing gaseous component treatment sheets to the interior of an EL element, it is convenient to prepare a gaseous component treatment sheet assembly by disposing a plurality of treatment sheets on a peeling base material (e.g., a tape like base material). In this case, the treatment sheets are processed previously to have a predetermined shape by punching or the like. This member can be produced by fixing the treatment sheets in a state that the adhesive layer is in contact with the peeling base material. This member is stored and transported in a state of being wound as required. This member can be applied easily to an EL element manufacturing line using an automated mounting device. As mentioned above, the treatment sheet of the present invention, which can be picked up by an automated mounting device, serves to improve efficiency in manufacturing an EL element.

## Claims

1. A gaseous component treatment sheet comprising a gas-permeable base film and a particulate remover for removing a predetermined gaseous component, the particulate remover is dispersed in the base film, wherein the base film is a porous film and further comprising a gas-permeable protective layer, and the protective layer is laminated on the base film.

2. The gaseous component treatment sheet according to claim 1, wherein the base film comprises at least one resin selected from the group consisting of a polyolefin-based resin and a fluorine resin.

3. The gaseous component treatment sheet according to claim 2, wherein the fluorine resin comprises polytetrafluoroethylene.

4. The gaseous component treatment sheet according to any of claims 1 to 3, wherein the particulate remover has a function of removing at least one component selected from the group consisting of water vapor, oxygen and an organic vapor.

5. The gaseous component treatment sheet according to any of claims 1 to 4, wherein the particle diameter of the remover is from about 0.1 microns to about 1000 microns.

6. The gaseous component treatment sheet according to any of claims 1 to 5, wherein the protective layer is a porous film.

7. The gaseous component treatment sheet according to any of claims 1to 6, further comprising an adhesive layer, and the adhesive layer is arranged as an outermost layer.

8. The gaseous component treatment sheet according to any of claims 1 to 7, wherein the protective layer is arranged as an outermost layer opposite to the adhesive layer.

9. A gaseous component treatment sheet assembly comprising gaseous component treatment sheets according to any of claims 1 to 8 and a peeling base material, the gaseous component treatment sheets are arranged on the peeling base material so that the adhesive layer is in contact with the peeling base material.

10. An electroluminescent element comprising the gaseous component treatment sheet according to any of claims 1 to 9.

11. A display comprising the electroluminescent element according to claim 10.

12. Use of a gaseous component treatment sheet for an electroluminsescent element comprising a gas-permeable base film and a particulate remover for removing a predetermined gaseous component, the particulate remover is dispersed in the base film, wherein the base film is a porous film.

13. The use according to claim 12, wherein the base film comprises at least one resin selected from the group consisting of a polyolefin-based resin and a fluorine resin.

14. The use according to claim 13, wherein the fluorine resin comprises polytetrafluoroethylene.

15. The use according to any of claims 12 to 14, wherein the particulate remover has a function of removing at least one component selected from the group consisting of water vapor, oxygen and an organic vapor.

16. The use according to any of claims 12 to 15, wherein the particle diameter of the remover is from about 0.1 microns to about 1000 microns.

17. The use according to any of claims 12 to 16, further comprising a gas-permeable protective layer, and the protective layer is laminated on the base film.

18. The use according to claim 17, wherein the protective layer is a porous film.

19. The use according to any of claims 12 to 18, further comprising an adhesive layer, and the adhesive layer is arranged as an outermost layer.

20. The use according to any of claims 17 to 19, wherein the protective layer is arranged as an outermost layer opposite to the adhesive layer.

21. The use of a gaseous component treatment sheet assembly comprising gaseous component treatment sheets according to any of claims 12 to 20 and a peeling base material, the gaseous component treatment sheets are arranged on the peeling base material so that the adhesive layer is in contact with the peeling base material.

22. The use according to any of claims 12 to 21 in a display.

## Patentansprüche

1. Flächengebilde zur Behandlung gasförmiger Komponenten, umfassend einen für Gas durchlässigen Basisfilm und ein teilchenförmiges Entfernungsmittel zum Entfernen einer vorbestimmten gasförmigen Komponente, wobei das teilchenförmige Entfernungsmittel in dem Basisfilm dispergiert ist, worin der Basisfilm ein poröser Film ist, und weiter umfassend eine gasdurchlässige Schutzschicht, und die Schutzschicht ist auf den Basisfilm laminiert.

2. Flächengebilde zur Behandlung gasförmiger Komponenten gemäß Anspruch 1, worin der Basisfilm wenigstens ein Harz umfasst, das aus der Gruppe gewählt ist, die besteht aus einem Harz auf Polyolefin-Basis und einem Fluorharz.

3. Flächengebilde zur Behandlung gasförmiger Komponenten gemäß Anspruch 2, worin das Fluorharz Polytetrafluorethylen umfasst.

4. Flächengebilde zur Behandlung gasförmiger Komponenten gemäß irgendeinem der Ansprüche 1 bis 3, worin das teilchenförmige Entfernungsmittel eine Funktion des Entfernens wenigstens einer Komponente hat, die gewählt ist aus der Gruppe, die besteht aus Wasserdampf, Sauerstoff und organischer Dampf.

5. Flächengebilde zur Behandlung gasförmiger Komponenten gemäß irgendeinem der Ansprüche 1 bis 4, worin der Teilchen-Durchmesser des Entfernungsmittels im Bereich von etwa 0,1 Mikron bis etwa 1.000 Mikron liegt.

6. Flächengebilde zur Behandlung gasförmiger Komponenten gemäß irgendeinem der Ansprüche 1 bis 5, worin die Schutzschicht ein poröser Film ist.

7. Flächengebilde zur Behandlung gasförmiger Komponenten gemäß irgendeinem der Ansprüche 1 bis 6, weiter umfassend eine Klebeschicht, und die Klebeschicht ist als äußerste Schicht angeordnet.

8. Flächengebilde zur Behandlung gasförmiger Komponenten gemäß irgendeinem der Ansprüche 1 bis 7, worin die Schutzschicht angeordnet ist als äußerste Schicht gegenüber der Klebeschicht.

9. Eine ein Flächengebilde zur Behandlung gasförmiger Komponenten umfassende Anordnung, umfassend Flächengebilde zur Behandlung gasförmiger Komponenten gemäß irgendeinem der Ansprüche 1 bis 8 und ein Abreiß-Basis-Material, wobei die Flächengebilde zur Behandlung gasförmiger Komponenten auf dem Abreiß-Basis-Material derart angeordnet sind, dass die Klebeschicht in Kontakt mit dem Abreiß-Basis-Material steht.

10. Elektrolumineszenz-Element, umfassend das Flächenmaterial zur Behandlung gasförmiger Komponenten gemäß irgendeinem der Ansprüche 1 bis 9.

11. Display, umfassend das Elektrolumineszenz-Element gemäß Anspruch 10.

12. Verwendung eines Flächengebildes zur Behandlung gasförmiger Komponenten für ein Elektrolumineszenz-Element, umfassend einen gasdurchlässigen Basisfilm und ein teilchenförmiges Entfernungsmittel zum Entfernen einer vorbestimmten gasförmigen Komponente, wobei das teilchenförmige Entfernungsmittel in dem Basisfilm dispergiert ist, worin der Basisfilm ein poröser Film ist.

13. Verwendung gemäß Anspruch 12, worin der Basisfilm wenigstens ein Harz umfasst, das gewählt ist aus der Gruppe, die besteht aus einem Harz auf Polyolefin-Basis und einem Fluor-Harz.

14. Verwendung gemäß Anspruch 13, worin das Fluor-Harz Polytetrafluorethylen umfasst.

15. Verwendung gemäß irgendeinem der Ansprüche 12 bis 14, worin das teilchenförmige Entfernungsmittel die Funktion des Entfernens wenigstens einer Komponente hat, die gewählt ist aus der Gruppe, die besteht aus Wasserdampf, Sauerstoff und organischem Dampf.

16. Verwendung gemäß irgendeinem der Ansprüche 12 bis 15, worin der Teilchen-durchmesser des Entfernungsmittels im Bereich von etwa 0,1 Mikron bis etwa 1.000 Mikron liegt.

17. Verwendung gemäß irgendeinem der Ansprüche 12 bis 16, weiter umfassend eine gasdurchlässige Schutzschicht, und die Schutzschicht ist auf den Basisfilm laminiert.

18. Verwendung gemäß Anspruch 17, worin die Schutzschicht ein poröser Film ist.

19. Verwendung gemäß irgendeinem der Ansprüche 12 bis 18, weiter umfassend eine Klebeschicht, und die Klebeschicht ist als äußerste Schicht angeordnet.

20. Verwendung gemäß irgendeinem der Ansprüche 17 bis 19, worin die Schutzschicht als äußerste Schicht gegenüber der Klebeschicht angeordnet ist.

21. Verwendung einer ein Flächengebilde zur Behandlung gasförmiger Komponenten umfassenden Anordnung, umfassend Flächengebilde zur Behandlung gasförmiger Komponenten gemäß irgendeinem der Ansprüche 12 bis 20 und ein Abreiß-Basis-Material, wobei die Flächengebilde zur Behandlung gasförmiger Komponenten auf dem Abreiß-Basis-Material so angeordnet sind, dass die Klebeschicht in Kontakt mit dem Abreiß-Basis-Material ist.

22. Verwendung gemäß irgendeinem der Ansprüche 12 bis 21 in einem Display.

## Revendications

1. Feuille pour traiter un composant gazeux, comprenant un film de base perméable au gaz et un agent d'élimination particulaire destiné à éliminer un composant gazeux prédéterminé, l'agent d'élimination particulaire étant dispersé dans le film de base, où le film de base est un film poreux et comprenant en outre une couche de protection perméable au gaz et la couche de protection est laminée sur le film de base.

2. Feuille pour traiter un composant gazeux selon la revendication 1, où le film de base comprend au moins une résine choisie dans le groupe constitué par une résine à base de polyoléfine et une résine fluorée.

3. Feuille pour traiter un composant gazeux selon la revendication 2, où la résine fluorée comprend du polytétrafluoroéthylène.

4. Feuille pour traiter un composant gazeux selon l'une quelconque des revendications 1 à 3, où l'agent d'élimination particulaire a une fonction d'élimination d'au moins un composant choisi dans le groupe constitué par la vapeur d'eau, l'oxygène et une vapeur organique.

5. Feuille pour traiter un composant gazeux selon l'une quelconque des revendications 1 à 4, où le diamètre des particules de l'agent d'élimination est d'environ 0,1 micron à environ 1000 microns.

6. Feuille pour traiter un composant gazeux selon l'une quelconque des revendications 1 à 5, où la couche de protection est un film poreux.

7. Feuille pour traiter un composant gazeux selon l'une quelconque des revendications 1 à 6, comprenant en outre une couche adhésive et la couche adhésive étant agencée comme couche la plus extérieure.

8. Feuille pour traiter un composant gazeux selon l'une quelconque des revendications 1 à 7, où la couche de protection est agencée comme couche la plus extérieure opposée à la couche adhésive.

9. Assemblage en feuille pour traiter un composant gazeux comprenant des feuilles pour traiter un composant gazeux selon l'une quelconque des revendications 1 à 8 et un matériau de base de pelage, les feuilles pour traiter un composant gazeux étant disposées sur le matériau de base de pelage de manière telle que la couche adhésive est en contact avec le matériau de base de pelage.

10. Elément électroluminescent comprenant la feuille pour traiter un composant gazeux selon l'une quelconque des revendications 1 à 9.

11. Affichage comprenant un élément électroluminescent selon la revendication 10.

12. Utilisation d'une feuille pour traiter un composant gazeux pour un élément électroluminescent, comprenant un film de base perméable au gaz et un agent d'élimination particulaire destiné à éliminer un composant gazeux prédéterminé, l'agent d'élimination particulaire étant dispersé dans le film de base, où le film de base est un film poreux.

13. Utilisation selon la revendication 12, où le film de base comprend au moins une résine choisie dans le groupe constitué par une résine à base d'une polyoléfine et une résine fluorée.

14. Utilisation selon la revendication 13, où la résine fluorée comprend du polytétrafluoroéthylène.

15. Utilisation selon l'une quelconque des revendications 12 à 14, où l'agent d'élimination particulaire a une fonction d'élimination d'au moins un composant choisi dans le groupe constitué par de la vapeur d'eau, de l'oxygène et une vapeur organique.

16. Utilisation selon l'une quelconque des revendications 12 à 15, où le diamètre des particules de l'agent d'élimination est d'environ 0,1 micron à environ 1000 microns.

17. Utilisation selon l'une quelconque des revendications 12 à 16, comprenant en outre une couche de protection perméable aux gaz et la couche de protection étant laminée sur le film de base.

18. Utilisation selon la revendication 17, où la couche de protection est un film poreux.

19. L'utilisation selon l'une quelconque des revendications 12 à 18, comprenant en outre une couche adhésive et la couche adhésive étant agencée comme la couche la plus extérieure.

20. Utilisation selon l'une quelconque des revendications 17 à 19, où la couche de protection est agencée comme la couche la plus extérieure opposée à la couche adhésive.

21. Utilisation d'un assemblage en feuille pour traiter un composant gazeux comprenant des feuilles pour traiter un composant gazeux selon l'une quelconque des revendications 12 à 20 et un matériau de base de pelage, les feuilles pour traiter un composant gazeux étant disposées sur le matériau de base de pelage de manière telle que la couche adhésive est en contact avec le matériau de base de pelage.

22. Utilisation selon l'une quelconque des revendications 12 à 21 dans un affichage.
